# FASCICULE DE BREVET EUROPEEN

(11) **EP 3 376 918 B1**
(45) Date de publication et mention de la délivrance du brevet: **12.08.2020**
(21) Numéro de dépôt: 16809497.7
(22) Date de dépôt: 15.11.2016
(51) Int. Cl.: A47J 37/06, F24C 7/04

(54) **DISPOSITIF ET PROCÉDÉ DE DÉCONGELATION, RÉCHAUFFAGE ET/OU CUISSON D'UN PRODUIT ALIMENTAIRE**
VORRICHTUNG UND VERFAHREN ZUM AUFTAUEN, AUFWÄRMEN UND/ODER GAREN VON NAHRUNGSMITTELN
DEVICE AND METHOD FOR DEFROSTING, REHEATING AND/OR COOKING A FOOD PRODUCT

(30) Priorité: 18.11.2015 FR 1561085
(43) Date de publication de la demande: 26.09.2018
(73) Titulaire: BOUTELOUP, Claude, 71220 Sivignon (FR); Nouraud, David, 64 700 Czarnkow (PL)
(72) Inventeur: BOUTELOUP, Claude, 71220 Sivignon (FR); Nouraud, David, 64 700 Czarnkow (PL)
(74) Mandataire: Schmidt, Martin Peter
(86) Numéro de dépôt international: PCT/FR2016/052958
(87) Numéro de publication internationale: WO 2017/085393

(56) Documents cités:
- WO-A1-2015/063381
- FR-A1- 2 955 762
- US-A- 4 960 977
- US-A1- 2002 069 764

## Description

### Domaine technique

L'invention concerne le domaine des dispositifs culinaires pour la cuisson de produits alimentaires. Plus particulièrement, l'invention concerne un dispositif pour la décongélation, le réchauffage et/ou la cuisson d'un produit alimentaire, notamment d'un produit alimentaire surgelé de type pizza, à pâte fine ou épaisse, de type sandwich-pizza, tartes, ou tout autre produit plat à base de pâte alimentaire.

### Etat de la technique

Traditionnellement, les fours à pizza sont des fours en pierres chauffés au feu de bois. Au 20^{ème} siècle sont apparus les fours électriques, moins encombrants et plus faciles à utiliser. Pour la restauration rapide on les préfère souvent aux fours traditionnels. Ils doivent être alimentés en électricité. La décongélation, le réchauffage et/ou la cuisson d'un produit alimentaire surgelé peut nécessiter un temps de chauffage relativement long et qui ne peut être adapté à une exploitation commerciale de type restauration rapide, que ce soit dans un four à micro-ondes, dans un four à air chaud ou dans un four qui combine l'air chaud et le rayonnement. Typiquement, le temps de décongélation, de réchauffage et/ou de cuisson d'une pizza surgelée est compris entre 4 et 5 minutes pour un four de type micro-ondes et entre 8 et 10 minutes pour un four électrique conventionnel à air chaud (à une température de l'ordre de 250°C, sans compter le temps de préchauffage du four). Cependant, on ne peut pas augmenter à volonté la puissance électrique du four s'il doit pouvoir fonctionner sur le réseau triphasé domestique alimenté en 220 V. Et on note que le four à micro-ondes tend à ramollir la pâte d'une pizza à réchauffer et/ou décongeler ; ce mode de chauffage ne donne en règle générale pas des résultats de qualité.

Un certain nombre de brevets proposent donc des fours électriques spécifiquement adapté pour la décongélation, le réchauffage et/ou la cuisson de pizzas qui visent à minimiser à la fois le temps de cycle et la consommation électrique de pointe. Le document FR 2 889 029 (Bouteloup) décrit un dispositif de décongélation, réchauffage et cuisson d'une pâte alimentaire, comprenant une enceinte de chauffage fermée pourvue d'une sole chauffante et d'une rampe de tubes émetteurs de rayons chauffants à forte puissance disposés au-dessus de ladite sole. Le rayonnement chauffant est concentré sur la surface supérieure de la pâte alimentaire par une plaque réfléchissante sus-jacente à la rampe de tubes émetteurs et la surface inférieure de la pâte est chauffée à haute température par contact avec la sole chauffante.

Le document FR 2 955 462 (SEBA) décrit un dispositif de décongélation, réchauffage et cuisson d'un produit alimentaire du même type que celui exposé ci-avant, mais comprenant en outre une couche de céramique recouvrant tout ou partie de la surface supérieure des tubes émetteurs de rayons chauffants.

Ces deux dispositifs, bien qu'apportant des avantages par rapport aux fours classiques et aux fours de type micro-ondes, présentent néanmoins certains inconvénients. En particulier, ces dispositifs ne conviennent pas pour la décongélation, le réchauffage et/ou la cuisson de produits alimentaires de grande taille, par exemple pour une pizza surgelée dont le diamètre est compris entre 25 et 32 cm, voire plus, car leur puissance est limitée : l'intensité du rayonnement fournie par les émetteurs compris dans ces dispositifs ne permet pas d'obtenir un produit complètement décongelé, réchauffé et/ou cuit après 2 minutes d'exposition aux rayonnements infrarouges. En particulier, la partie centrale de la pizza est partiellement décongelée alors que la partie périphérique est réchauffée et/ou cuite. Il faudrait chauffer encore quelques minutes supplémentaires pour pouvoir obtenir un produit parfaitement décongelé, réchauffé ou cuit, ce qui n'est pas souhaitable car d'une part, le temps de chauffage supplémentaire a tendance à griller les contours du produit alimentaire et d'autre part, ce temps supplémentaire peut entraîner à terme une diminution de la rentabilité globale d'un service de restauration rapide proposant de tels produits alimentaires.

Récemment, la demande de brevet WO 2015/063381 (Bouteloup) a proposé un procédé de décongélation, réchauffage et/ou cuisson d'une pizza surgelée dans un four électrique à air chaud muni d'une résistance chauffante (qui peut être noyée dans une sole qui supporte le produits alimentaire), et d'une rampe d'émetteurs infrarouge ; dans ce procédé on chauffe d'abord la sole puis on coupe l'alimentation de la sole et on active l'alimentation des émetteurs infrarouge. Ce basculement évite que les deux éléments ne soient actifs en même temps, ce qui limite la puissance électrique absorbée du dispositif à environ 3,5 kW, compatible avec une alimentation en 220 V sur secteur triphasé.

Cependant, il semble que dans ce dispositif il est assez difficile de stabiliser les conditions de traitement auxquelles est exposée la pizza au cours de son traitement ; en particulier il est difficile de stabiliser la température de l'air dans le four pendant une campagne de production (typiquement deux à trois heures pendant les heures de repas), et surtout au début de service (typiquement la première demi-heure) et en fin de service (lorsque l'utilisation du four devient intermittente). L'inventeur s'est rendu compte que la cuisson rapide d'un produit humide dans un four à air chaud est toujours approximative et inhomogène ; cela se voit surtout dans le cas de produits plats en pâte alimentaire : certaines zones dessèchent et noircissent, d'autres sont cuites correctement, d'autres encore pas assez.

Par ailleurs, il est souhaitable de diminuer encore la consommation électrique du four électrique, afin de permettre le branchement d'autres dispositifs électriques sur la même branche du secteur triphasé sans la surcharger.

US 2002/069764 concerne un appareil de chauffage, comprenant des logements inférieur et supérieur, reliés par un montant. Chaque logement reçoit un élément de chauffage, réalisé sous forme d'une bande métallique entourée d'une gaine. Ce document ne divulgue pas l'utilisation d'un chauffage par émission à infrarouge. Par ailleurs on ne retrouve pas non plus, en partie supérieure, des organes de chauffage distincts prévus respectivement au centre et en périphérie.

US 4,960,977 décrit un four de cuisson à émission à infrarouge, comportant des modules supérieur et inférieur, dont chacun renferme des éléments de chauffage par émission à infrarouge. Par ailleurs, ce four comporte des montants également équipés d'un organe de chauffage à émission à infrarouge. On ne retrouve pas, dans ce document, de moyens de chauffage de type électrique. De plus, il ne mentionne pas la possibilité de prévoir des organes de chauffage distincts, en partie supérieure.

FR 2 955 762 divulgue un appareil de cuisson dont la structure est voisine de celle du four de US 4,960,977. On y retrouve des cassettes respectivement supérieure et inférieure, dont chacune est équipée de moyens de chauffage incorporant des éléments par émission à infrarouge. Les mêmes conclusions que celles présentées ci-dessus, à propos de US 4,960,977, s'appliquent quant à l'enseignement de FR 2 955 762.

La présente invention a pour objectif de pallier les divers inconvénients de l'art antérieur et de proposer un dispositif électrique de cuisson de pizza qui convient à la décongélation, au réchauffage et/ou à la cuisson d'une pizza en quelques minutes, qui soit aussi simple et léger que possible, qui permet une cuisson homogène, qui permet d'atteindre de manière régulière une excellente qualité gustative, olfactive et visuelle de la pizza cuite, qui soit facile à utiliser, et qui absorbe une puissance électrique aussi faible que possible.

### Objet de l'invention

L'invention vise à remédier à ces inconvénients et propose un nouveau dispositif pour décongeler, réchauffer et/ou cuire un produit alimentaire, notamment une pâte alimentaire surgelée de forme sensiblement plate, dans un dispositif comprenant au moins un espace de chauffage pourvue d'au moins un support de cuisson, et de deux moyens de chauffage électrique différents, ce dispositif pouvant être connecté à une installation électrique en monophasé.

A cet effet, l'invention a pour objet un dispositif de décongélation, réchauffage et/ou cuisson d'un produit alimentaire, notamment d'une pâte alimentaire surgelée, ce dispositif comprenant une platine, un couvercle définissant avec la platine un espace de cuisson du produit alimentaire, un support de réception du produit alimentaire, disposé sur la platine, des premiers moyens de chauffage du support, notamment de type électrique, prévus au-dessous ou à l'intérieur dudit support, des seconds moyens de chauffage prévus au-dessus du support, notamment de type à émission infrarouge, caractérisé en ce que l'espace de cuisson est ouvert latéralement sur au moins une partie substantielle du périmètre du dispositif et en ce que les seconds moyens de chauffage comprennent un organe central de chauffage propre à chauffer une partie centrale du produit alimentaire, ainsi qu'un organe périphérique de chauffage propre à chauffer une partie périphérique du produit alimentaire.
- l'organe central de chauffage est distinct de l'organe périphérique de chauffage. Cela signifie que ces deux organes peuvent être commandés de façon indépendante l'un de l'autre. En particulier, ces deux organes n'ont aucune région de chauffage commune. En particulier, ces deux organes ne s'étendent pas dans le prolongement l'un de l'autre ;

Selon d'autres caractéristiques du dispositif conforme à l'invention, prises isolément ou selon toute combinaison techniquement compatible :
- les parois en regard de la platine et du couvercle définissent une ouverture de l'espace de cuisson, qui s'étend sur au moins une partie substantielle du périmètre du dispositif ;
- l'ouverture de l'espace de cuisson s'étend sur au moins 50% du périmètre du dispositif, plus particulièrement sur au moins 70% du périmètre du dispositif, encore plus particulièrement sur au moins 80% du périmètre du dispositif ;
- l'espace de cuisson possède une hauteur comprise entre 50 et 100 millimètres, de préférence entre 60 et 80 millimètres, encore de préférence entre 65 et 75 millimètres ;
- le dispositif est polygonal, notamment rectangulaire, en vue de dessus et l'ouverture du volume de cuisson s'étend sur l'intégralité d'au moins la moitié des côtés du polygone, en particulier sur l'intégralité d'au moins deux côtés du rectangle ;
- le rapport entre la dimension radiale de l'organe périphérique de chauffage et la dimension radiale de l'organe central de chauffage est compris entre 2 et 3, notamment voisine de 2.5 ;
- chaque organe de chauffage, respectivement central et périphérique, comprend un unique élément de chauffage, chaque élément de chauffage étant avantageusement relié à des moyens de commande respectifs, indépendants les uns des autres ;
- chaque élément de chauffage, respectivement central et périphérique, est propre à émettre à une même longueur d'onde, notamment comprise entre 1.6 et 2.1 micromètres ;
- les éléments de chauffage, respectivement central et périphérique, sont propres à émettre des longueurs d'onde différentes, une première gamme de longueurs d'onde étant notamment comprise entre 1.05 et 1.45 micromètres, alors qu'une autre gamme de longueurs d'onde est notamment comprise entre 1.6 et 2.1 micromètres ;
- chaque organe de chauffage, respectivement central et périphérique, comprend un premier et un deuxième éléments de chauffage s'étendant au voisinage l'un de l'autre, les deux éléments de chauffage étant propres à émettre à des première et deuxième gammes de longueurs d'onde différentes ;
- la première gamme de longueurs d'onde est comprise entre 1.05 et 1.45 micromètres, alors que la seconde gamme de longueurs d'onde est comprise entre 1.6 et 2.1 micromètres ;
- chaque premier élément de chauffage est relié à des premiers moyens de commande et chaque second élément de chauffage est relié à des seconds moyens de commande, les premiers et les seconds moyens de commande étant indépendants ;
- chaque élément de chauffage comprend un tronçon actif en forme de portion de cercle, ainsi qu'au moins un tronçon rectiligne de raccordement à une alimentation ;
- l'organe périphérique de chauffage est entouré par une jupe destinée à renvoyer le rayonnement sur le produit alimentaire.

L'invention a également pour objet un procédé de décongélation, réchauffage et/ou cuisson d'un produit alimentaire, notamment d'une pâte alimentaire surgelée, dans un dispositif tel que ci-dessus, dans lequel :
(a) on chauffe ledit support au moyen desdits premiers moyens de chauffage jusqu'à atteindre une température de consigne et on maintient ladite température de consigne ;
(b) on approvisionne un produit alimentaire sur ledit support dans l'espace de chauffage ;
(c) on active les seconds moyens de chauffage
(d) on décongèle, on réchauffe et/ou on cuit le produit alimentaire approvisionné dans l'espace de chauffage pendant une période de temps inférieure à 3 minutes, de préférence inférieure à 2 minutes, plus préférentiellement inférieure à 1,5 minutes ;
(e) on sort du dispositif le produit alimentaire décongelé, réchauffé et/ou cuit.

Selon d'autres caractéristiques du dispositif conforme à l'invention, prises isolément ou selon toute combinaison techniquement compatible :
- la température de consigne pour chauffer ledit support (8) est comprise entre 220 et 350°C, de préférence entre 280 et 340°C, et plus préférentiellement entre 300 et 320°C.
- au cours de l'étape (d), la puissance électrique totale absorbée par le dispositif ne dépasse pas 3,5 kW.
- dans une première phase de l'étape (c), on active uniquement le premier élément de chauffage central et le premier élément de chauffage périphérique, émettant tous deux dans la première gamme de longueur d'ondes puis, dans une deuxième phase de l'étape (c), on active uniquement le deuxième élément de chauffage central et le deuxième élément de chauffage périphérique, émettant tous deux dans la deuxième gamme de longueur d'ondes.

L'inventeur s'est rendu compte qu'une partie des inconvénients des fours électriques à air chaud selon l'état de la technique provient du fait que ces fours cherchent à reproduire l'environnement thermique d'un four à pizza traditionnel en pierre et au feu de bois. Ces fours traditionnels combinent le chauffage par contact direct avec une surface chaude, le chauffage à air chaud et le chauffage par le rayonnement infrarouge provenant des braises et des parois. Ils sont de très grande taille, possèdent une grande inertie thermique et sont assez homogènes au sens que l'utilisateur connaît le positionnement optimal des différents types de pizzas lors de leur différentes phases de cuisson. On constate que, dans ces fours, la cuisson est lente et progressive. Par ailleurs, ce type de four est assez peu perturbé par l'ouverture de la porte lors du chargement et déchargement.

Or, avec un four de petite taille qui ne peut accueillir qu'une pizza à la fois, la cuisson lente est exclue pour des raisons pratiques. Par conséquent, il faut accélérer le traitement de la pizza dans le four. Le temps de cycle étant plus court que dans un four à pizza traditionnel, le respect des conditions optimales du traitement est plus critique. Ce problème est exacerbé par l'utilisation de pizzas congelées. En pratique les fours électriques de petite taille entraînent toujours un risque de dessèchement au moins partiel de la pizza.

En partant du constat que dans un four de petite taille qui associe le chauffage de la pizza par sa plaque de support au chauffage par rayonnement de sa face supérieure il est très difficile voire impossible d'obtenir une homogénéité satisfaisante de la température de l'air, l'inventeur a trouvé qu'en renonçant au concept d'un four à air chaud il est possible de concevoir un cuiseur électrique à pizza permettant la cuisson rapide et homogène d'une pizza sans risque de dessèchement.

Selon l'invention le problème est résolu par un cuiseur électrique dont l'espace de cuisson n'est pas fermé, mais est au contraire au moins partiellement ouvert. Par ailleurs, on associe des moyens de chauffage du support, typiquement électriques, ainsi que des moyens de chauffage, placés en partie haute du dispositif. Ces derniers permettent de chauffer, d'une part la partie centrale du produit alimentaire et, d'autre part, la partie périphérique de ce dernier. A cet effet, on prévoit un organe central de chauffage propre à chauffer ladite partie centrale, ainsi qu'un organe périphérique de chauffage propre à chauffer ladite partie périphérique.

Le dispositif selon l'invention ne comporte pas d'enceinte fermée, ce n'est donc pas un four à air chaud. Le chauffage se fait uniquement par le contact avec la plaque chaude sur laquelle repose le produit alimentaire, et par rayonnement incident sur la face supérieure. Cette absence d'air chaud dans le cuiseur selon l'invention suppose une grande homogénéité des deux autres moyens de chauffage, et en particulier des tubes rayonnants.

### Description des figures

La figure 1 est une vue en perspective, illustrant sous un premier angle le dispositif conforme à l'invention, dépourvu de son support de cuisson afin de mieux visualiser les moyens de chauffage de ce dernier.
La figure 2 est une vue en perspective, illustrant sous le même angle le dispositif de l'invention, équipé de son support de cuisson.
La figure 3 est une vue en perspective sous le même angle du dispositif de l'invention, illustrant plus particulièrement les moyens de chauffage par rayonnement équipant ce dernier.
La figure 4 est une vue en perspective, illustrant sous un autre angle le dispositif conforme à l'invention.
La figure 5 est une vue en coupe longitudinale du dispositif conforme à l'invention, selon la ligne V-V à la figure 1.
La figure 6 est une vue de dessus, illustrant plus particulièrement les moyens de chauffage par rayonnement du dispositif conforme à l'invention.
La figure 7 est une vue de dessus, illustrant les moyens de chauffage par rayonnement d'un dispositif conforme à une variante de réalisation de l'invention.

**Liste des repères utilisés sur les figures :**

| | | | |
|---|---|---|---|
| 1 | Cuiseur selon l'invention | 12 | Boîtier |
| 2 | Couvercle | 30a | Montant vertical |
| 3 | Platine | 30b | Montant vertical |
| 4 | Pieds | 31 | Espace de chauffage |
| 5 | Premier moyen de chauffage | 32 | Ouverture |
| 6 | Plaque | 33 | Bande |
| 7 | Jupe | 34 | Joue oblique |
| 7a | Echancrure | 36,37 | Barres perpendiculaires |
| 7b | Encoches | 38 | Gabarit de sécurité |
| 8a- 8d | Fentes latérales | 50,60 | Organes de chauffage |
| 10 | Interrupteur | 51,61 | Tronçon actif |
| 11 | Horloge | 52,62 | Tronçon d'alimentation |
| 70,80 | Organes de chauffage | 71,72 | Emetteurs centraux |
| 81,82 | Emetteurs périphériques | 90 | Carte de commande |
| C71,C72 | Commandes | C81,C82 | Commandes |

### Description

Des modes de réalisation préférés du dispositif de décongélation, réchauffage et/ou cuisson d'un produit alimentaire seront maintenant décrits en détail en se reportant aux figures. On comprendra que plusieurs modifications peuvent être apportées aux modes de réalisation divulgués ci-après. La description ne doit pas être comprise comme une limitation de l'invention, mais uniquement comme des exemplifications de modes de réalisation préférés.

Le dispositif selon l'invention **1**, qui sera désigné ici également par le mot « cuiseur », comprend essentiellement une partie supérieure **2**, ou couvercle, et une partie inférieure **3**, ou platine. En service la platine **3** repose, par l'intermédiaire de pieds **4**, sur une surface de travail non représentée, telle une table. La platine **3** et le couvercle **2** se présentent sous la forme de plaques parallèles, sensiblement horizontales, qui peuvent être perforées sur tout ou partie de leur surface.

Cette platine et ce couvercle sont reliés par deux montants verticaux **30a** et **30b,** prévus en face l'un de l'autre. Dans un mode de réalisation avantageux lesdits premier et deuxième montants **30a,30b** sont des tôles, et forment de préférence une double paroi, ce qui permet une isolation thermique de la peau externe desdits montants **30a**,**30b**, pour éviter que l'utilisateur ne se brûle en touchant l'appareil **1.**

Les surfaces en regard, à savoir la surface supérieure de la platine **3**, la surface inférieure du couvercle **2,** ainsi que la surface intérieure de chaque montant **30a** et **30b,** délimitent un espace de chauffage **31**. La hauteur de cet espace de chauffage est égale à la distance entre les surfaces intérieures en regard, appartenant au couvercle et à la platine.

En vue de dessus, la platine **3** et le couvercle **2** sont de forme polygonale, dans l'exemple illustré de forme rectangulaire. Par convention, les premier et second côtés sont ceux occupés par les premier et second montants **30a** et **30b**, les deux autres côtés étant dénommés troisième et quatrième côtés. Dans un autre mode de réalisation cette platine et ce couvercle peuvent avoir d'autres formes; ils peuvent par exemple être de forme circulaire.

L'espace de chauffage **31** n'est pas une enceinte, à savoir qu'il est ouvert latéralement ou, en d'autres termes, qu'il débouche latéralement sur une majorité du pourtour du dispositif. Exprimé encore autrement, la platine et le couvercle délimitent une ouverture qui s'étend sur la majorité de ce périmètre. Dans l'exemple illustré, cette ouverture est formée par quatre fentes **8a** à **8d** présentes sur les quatre côtés du dispositif 1, lesquelles sont dénommées première à quatrième fentes. Comme on va le voir dans ce qui suit, certaines de ces fentes sont en tout ou partie obturées.

Le premier montant **30a**, qui est porté par la platine **3**, obture la première fente **8a**, uniquement dans la partie centrale de cette dernière. Cette fente s'étend donc sur les extrémités latérales du premier côté. De façon analogue, le deuxième montant **30b** obture la deuxième fente **8b**, uniquement dans la partie centrale de cette dernière. Cette fente s'étend donc également sur les extrémités latérales du deuxième côté.

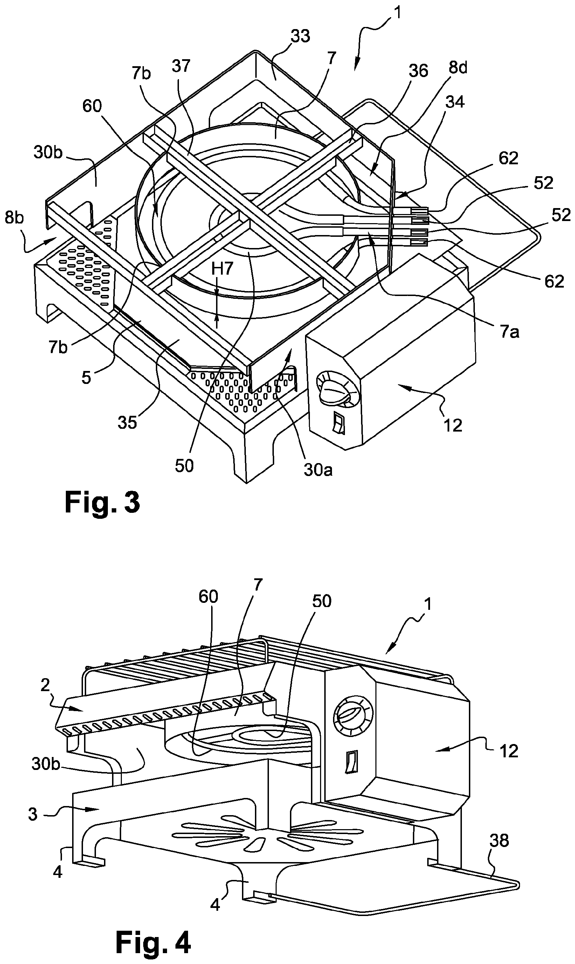

Comme notamment montré sur la figure 3, la tôle formant le montant **30a** se prolonge, au niveau du troisième côté, par un bandeau **33** présent sur la partie supérieure de la troisième fente **8c.** Cette dernière s'étend donc sur l'intégralité du troisième côté, en étant obturée partiellement par le bandeau précité. Ce bandeau **33** est relié, via une joue oblique **34**, au deuxième montant **30b**. Enfin, le premier **30a** et le deuxième montant **30b** sont reliés par une tige **35**, présente sur la partie supérieure de la quatrième fente **8d.** Cette dernière s'étend donc sur l'intégralité du quatrième côté, en étant obturée partiellement par la tige précitée.

On note P le périmètre du dispositif, qui est égal à L1+L2+L3+L4, soit la somme des longueurs des côtés. Comme vu ci-dessus, l'ouverture formée par les fentes **8a** à **8d** s'étend sur l'intégralité des troisième et quatrième côtés, ainsi que sur les extrémités latérales des premier et deuxième côtés. Dans l'exemple illustré, cette ouverture s'étend donc sur environ 80% du périmètre précité.

Conformément à l'invention, cette ouverture s'étend sur au moins une partie substantielle de ce périmètre. De façon avantageuse, elle s'étend sur au moins 50% de ce périmètre, de façon tout à fait avantageuse sur au moins 70%, de façon préférée sur au moins 80% de ce périmètre. L'homme du métier dimensionnera cette ouverture, afin qu'elle remplisse l'effet technique d'évacuation de la chaleur, tel que visé par l'invention.

Une plaque **6**, formant support de cuisson, de préférence sensiblement horizontale, est fixée par tout moyen approprié sur la surface supérieure de la platine **3.** En service, le produit alimentaire repose sur ce support de cuisson **6** qui peut être réalisé en tout matériau approprié, notamment en pierre, en métal, en verre ou en céramique. Selon un mode de réalisation préféré de l'invention, le support **6** est une sole, de préférence une sole en pierre de lave, par exemple une pierre de lave de faible densité (i.e. poreuse). Une telle pierre absorbe et restitue très rapidement la chaleur. Sa face supérieure peut être de toute forme permettant d'accueilli une pâte alimentaire plate ayant la forme d'un disque, notamment d'un disque circulaire. Ainsi la face supérieure de la plaque de cuissons peut avoir une forme circulaire, rectangulaire, carrée, hexagonale, octogonale, ou encore rectangulaire à bords rongés, ou toute autre forme appropriée.

Le dispositif selon l'invention possède des premiers et seconds moyens de chauffage. Les premiers moyens de chauffage sont formés par une résistance de chauffage **5** en contact thermique avec la plaque de base, sur laquelle repose le produit alimentaire pendant sa cuisson. Dans un mode de réalisation avantageux la résistance électrique **5** est directement intégrée dans le support **6** ; à ce titre elle peut être positionnée au-dessous du support **6** et fixée sur ce dernier; alternativement elle peut être disposée à l'intérieur dudit support **6.** Selon un mode de réalisation avantageux cette résistance **5** est encastrée ou noyée dans ladite plaque **6**; la plaque **6** peut présenter un logement ou une rainure dans lequel s'insère la résistance chauffante **5.**

Les seconds moyens de chauffage comprennent deux organes de chauffage **50** et **60**, dont l'un est destiné à chauffer une partie centrale du produit alimentaire, et dont l'autre est destiné à chauffer une partie périphérique de ce produit alimentaire. Par conséquent, ces deux organes de chauffage sont dénommés respectivement « central **50**» et « périphérique **60**».

Ces deux organes, respectivement central et périphérique, sont avantageusement distincts l'un de l'autre. Cela signifie qu'ils n'ont aucune région de chauffage commune et, en particulier, qu'ils s'étendent à distance l'un de l'autre. En tout état de cause, ils ne s'étendent pas dans le prolongement l'un de l'autre. De façon préférée, ces organes de chauffage peuvent être commandés de façon indépendante, notamment grâce à des moyens de commande également distincts.

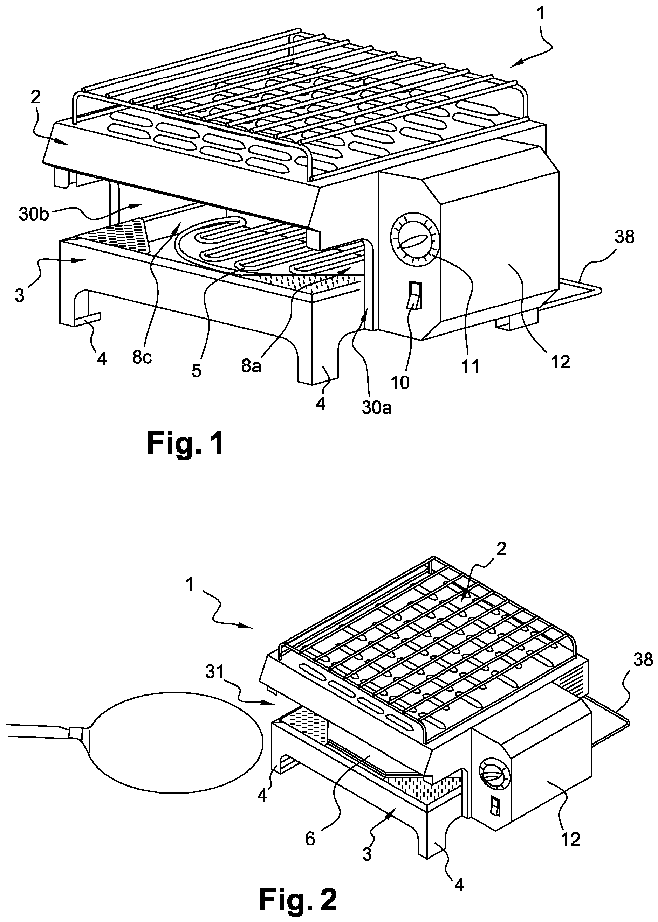

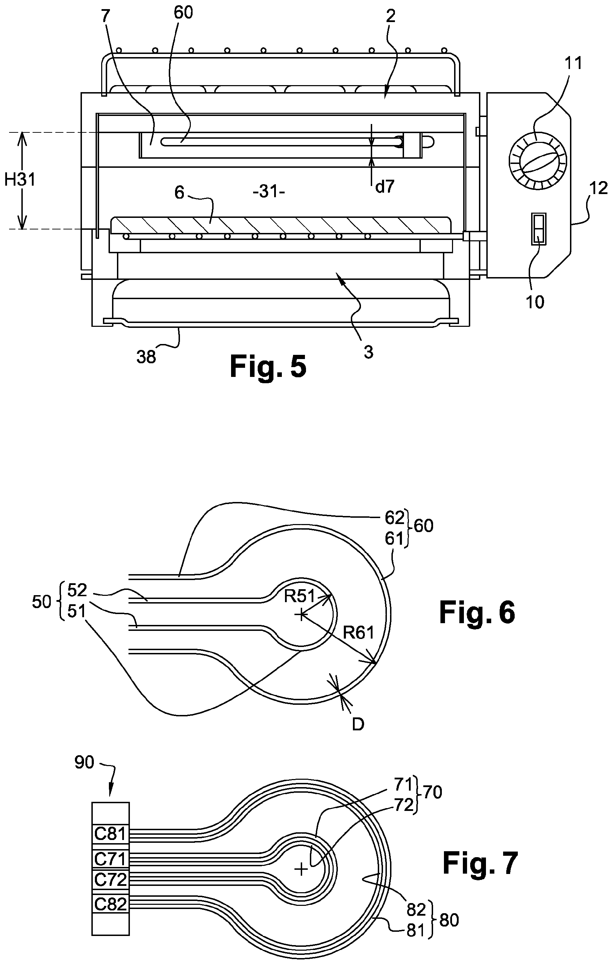

Dans le premier mode de réalisation, illustré aux figures 1 à 6, chaque organe de chauffage est formé par un unique élément de chauffage **50** et **60**, qui est un émetteur de rayonnement thermique placés dans un plan se situant au-dessus de la plaque. Comme le montre notamment la figure 6, chaque émetteur se présente sous la forme d'un tube, comprenant un tronçon actif **51** ou **61,** ou tronçon de chauffage, en forme de portion de cercle, ainsi qu'un tronçon d'alimentation rectiligne **52** ou **62**, lequel est relié à une alimentation électrique, non représentée sur les figures. Les deux tronçons actifs sont disposés de manière concentrique, de préférence dans le même plan. Par rapport aux tubes droits utilisés dans les fours électriques selon l'état de la technique cette forme donne une meilleure homogénéité sur la surface de la pizza.

En référence à cette figure 6, les dimensions suivantes sont données à titre purement indicatif, sans restreindre la portée de l'invention :
- diamètre D de chaque tube : entre 4 et 6 millimètres, notamment voisin de 5 millimètres ;
- dimension radiale, ou rayon R51, du tronçon actif central 51 : entre 35 et 55 millimètres, typiquement voisine de 45 millimètres (4.5 centimètres) ;
- dimension radiale, ou rayon R61, du tronçon actif périphérique 61 : entre 100 et 130 millimètres, typiquement voisine de 115 millimètres (11.5 centimètres) ;
- rapport R61/R51 entre les rayons des tronçons actifs : entre 2 et 3, typiquement voisin de 2.5.

Dans une première variante, chaque émetteur **50** et **60** fonctionne à la même gamme de longueur d'ondes, qui est typiquement comprise entre 1.05 et 1.45 micromètres (µm). Ces émetteurs infrarouges, dits courts « standards » ont des températures de filament typiquement comprises entre 2000 et 2800K.

Dans d'autres variantes, au moins un émetteur **50** et/ou **60** possède une température de filament inférieure à 1800 K, typiquement comprise entre 1400 et 1800K, de façon à décaler le spectre d'émission vers les infrarouges moyens. De la sorte cet émetteur, qui est dénommé « moyen rapide », émet à une longueur d'onde comprise entre 1.6 et 2.1 micromètres (µm), à savoir supérieure à celle des émetteurs courts présentés au paragraphe précédent.

Ce premier mode de réalisation couvre donc quatre variantes. Les deux émetteurs peuvent émettre à une même gamme de longueur d'ondes en étant tous deux, soit « courts », soit « moyens rapides ». Ces deux émetteurs peuvent aussi émettre à des longueurs d'onde différentes avec, soit un « court » au centre et un « moyen rapide » en périphérie, soit un « moyen rapide » au centre et un « court » en périphérie.

L'émetteur périphérique **60** est bordé par une jupe **7**, obturant sensiblement tout l'espace intercalaire formé entre la plaque de cuisson **5** et le couvercle **2**. Elle présente une fonction de déflecteur, à savoir qu'elle permet de diriger le rayonnement produit par les émetteurs, en direction du produit alimentaire. Par ailleurs, elle supprime sensiblement tout éblouissement des émetteurs pour l'utilisateur.

Cette jupe **7** est interrompue par une échancrure **7a**, afin de permettre le passage des tronçons d'alimentation **52**, **62** précités. Elle est en outre creusée d'encoches **7b,** permettant la mise en place de deux barres perpendiculaires **36**, **37** destinées à rigidifier la construction. Dans un mode de réalisation avantageux, comme montré sur la figure 5, le ou les plan(s) dans le(s)quel(s) s'étendent lesdits émetteurs **50 et 60** se situe(nt) à peu près à mi-hauteur de ladite jupe **7.** A titre d'exemple, la distance **d7** entre l'extrémité inférieure de l'élément de chauffage périphérique et l'extrémité inférieure de cette jupe est comprise entre 15 et 25 millimètres, en étant notamment voisine de 20 mm (voir aussi figure 5).

Dans un mode de réalisation avantageux, on utilise avec une plaque **6** d'une taille suffisante pour permettant d'accueillir une pizza d'un diamètre de 34 cm une résistance chauffante (premier moyen de chauffage) d'une puissance nominale comprise entre 500 W et 900 W, de préférence entre 550 W et 800 W et encore plus préférentiellement entre 600 W et 700 W ; une telle résistance conduit à la surface de la plaque à une température d'équilibre comprise entre 280°C et 300°C. On utilise des tubes (deuxième élément de chauffage, tube central et périphérique) d'une puissance nominale cumulée comprise entre 1000 W et 2000 W, de manière à avoir une puissance totale du cuiseur comprise entre 2500 W et 3500 W, et de préférence ne dépassant pas 3200 W, et encore plus préférentiellement ne pas dépassant 3000 W.

Le cuiseur selon l'invention n'a pas besoin de thermostat. La plaque atteint sa température d'équilibre après 20 à 30 minutes environ, ou après 5 à 10 minutes si l'on allume également les tubes rayonnants. Il suffit de prévoir un interrupteur général **10** et une horloge **11** qui commande ces émetteurs **50, 60,** utilisés de manière intermittente lorsqu'un produit alimentaire est déposé sur la plaque **6.** Cet interrupteur **10** et cette horloge **11** sont prévus par exemple sur un boîtier **12**, supporté par le montant **30a.**

Dans un mode d'utilisation avantageux du dispositif selon l'invention, au cours d'une campagne de production, la résistance chauffante **5**, soit le premier moyen de chauffage, fonctionne en permanence, actionnée typiquement par l'interrupteur général précité **10**, qui forme un premier élément de commande. On déclenche le fonctionnement des émetteurs **50** et **60** pour chaque pizza, en actionnant l'horloge **11**, qui forme un deuxième élément de commande. Alternativement on peut faire fonctionner également les émetteurs **50** et **60** de manière permanente, mais dans ce cas l'utilisateur perd le bénéfice de leur coupure automatique par l'horloge **11.** De façon typique, les émetteurs sont à une température voisine de 700°C, ce qui garantit une température voisine de 400°C sur le produit.

Dans un mode de réalisation avantageux la hauteur **H31** de l'espace de chauffage **31** est comprise entre 50 mm et 100 mm. Si la hauteur est trop grande, le chauffage et/ou la cuisson de la pâte alimentaire n'est pas assez rapide. Si la hauteur est trop faible, l'angle d'émission du rayonnement thermique émis par les deuxièmes moyens de chauffage est rétréci, ce qui nuit à l'homogénéité du chauffage sur la surface de la pâte alimentaire, et peut conduire au lignage du produit alimentaire (i.e. à une zone visible, plus cuite voire desséchée ou même brûlée, qui reproduit la forme des émetteurs radiants). Par ailleurs, il y a un risque accru d'éclaboussure qui peut survenir lors du chauffage (notamment de morceaux de légumes). Ladite hauteur est de préférence entre 60 mm et 80 mm. Une valeur comprise entre 65 mm et 75 mm est optimale.

Le dispositif selon l'invention peut comprendre un gabarit de sécurité **38** qui s'étend au moins sur une partie d'au moins une de ses faces latérales (et de préférence une face ne présentant pas de montant, i.e. une face ouverte, par exemple l'un desdites deuxième ou quatrième fentes). Ce gabarit de sécurité **38** empêche l'utilisateur d'approcher le dispositif trop d'une paroi, et maintient ainsi une distance de sécurité thermique entre l'espace de chauffage du dispositif et la paroi.

A titre d'exemple, on a réalisé un tel appareil dont la masse ne dépasse pas 12 kg. Le premier moyen de chauffage avait une puissance nominale de 650 W, les deuxièmes moyens de chauffage une puissance nominale cumulée de 2900 W. Le cuiseur était alimenté sur secteur 230 V monophasé. On a déterminé la consommation énergétique totale d'une campagne de production de 10 pizzas au cours d'une heure, pendant laquelle le premier moyen de chauffage fonctionnait de manière permanente et le deuxième moyen de chauffage de manière intermittente.

Si on considère que le chauffage de chacune de ces pizzas est d'environ 2 minutes, le deuxième moyen de chauffage a été activé durant 10 (pour 10 pizzas) * 2 (pour 2 minutes), soit 20 minutes et une consommation de 2900 W * (20minutes/60minutes) = 967 W. Le premier moyen a été activé durant une heure, soit une consommation de 650 W. La consommation totale a donc été voisine de 1617 W. Sachant que la consommation énergétique peut être un poste significatif dans le coût d'exploitation d'un cuiseur, cette faible valeur présente un grand intérêt.

A titre de comparaison, pour le même type d'application, le four SWS 430, conforme à l'enseignement de FR 2 889 029 décrit ci-dessus, pèse 18 kg et présente des dimensions extérieures de 580mm x 480 mm x 240 mm. Sa consommation nominale est de 3600 W, alimentée en 230 V sur secteur monophasé.

Selon une variante avantageuse de l'invention, illustrée à la figure 7, chaque organe de chauffage 70 et 80 est formé par deux éléments de chauffage accolés. On retrouve donc deux émetteurs centraux 71 et 72, ainsi que deux émetteurs périphériques 81 et 82. Ces différents émetteurs tubulaires présentent une structure analogue à celle des émetteurs du premier mode de réalisation, à savoir qu'ils comprennent un tronçon circulaire actif, ainsi qu'un tronçon rectiligne d'alimentation.

Parmi chaque couple d'émetteurs, il est particulièrement avantageux qu'ils présentent des caractéristiques différentes, en particulier qu'ils puissent émettre à des longueurs d'ondes différentes. A titre d'exemple, les premiers émetteurs 71 et 81 sont « courts » et les seconds émetteurs 72 et 82 sont « moyens rapides », selon la terminologie explicitée ci-dessus. Ces émetteurs 71, 72, 81, 82 sont reliés à une carte électronique de commande 90, qui permet de les commander indépendamment les uns des autres. A cet effet, sur la figure 7, on a représenté de façon schématique des commandes C71, C72, C81 et C82.

Lors de la mise en oeuvre du dispositif conforme à ce second mode de réalisation, la résistance électrique est tout d'abord activée, de façon analogue à ce qui a été décrit en référence au premier mode de réalisation. Les émetteurs 71, 72, 81 et 82 sont ensuite activés, isolément ou en combinaison.

Par exemple, dans le cas d'un produit surgelé, on peut prévoir d'activer tout d'abord les émetteurs « moyens rapides » 72 et 82, par exemple pendant une durée de 30 à 60 secondes, puis de les arrêter et d'activer ensuite les émetteurs « courts » 71 et 81, pendant une durée par exemple comprise aussi entre 30 et 60 secondes. De façon avantageuse, la durée totale de chauffage sera inférieure à 2 minutes.

A titre de variante, on peut également prévoir d'utiliser, lors d'une campagne de réchauffage, uniquement soit les émetteurs « moyens rapides » 72 et 82, soit les émetteurs « courts » 71 et 81. A titre de variante supplémentaire, on peut prévoir d'activer simultanément à la fois les émetteurs « moyens rapides » 72 et 82 et les émetteurs « courts » 71 et 81, pendant tout ou partie de la campagne de réchauffage. Le type d'émetteurs mis en œuvre dépendra de différents paramètres, tels que la nature du produit, la température à laquelle il est admis dans l'espace de chauffage, ou encore le caractère plus ou moins croustillant désiré par le consommateur final.

Le cuiseur selon l'invention n'est pas un four à air chaud, contrairement aux fours fermés selon l'état de la technique dans lesquels on observe, lors des opérations successives de cuisson, une accumulation de chaleur progressive ; cette accumulation de chaleur est due au fonctionnement en pleine puissance des moyens de chauffage, qui est nécessaire pour cuire la pizza. Le cuiseur selon l'invention est ouvert et ne comporte pas d'enceinte fermée. Ses tubes chauffants (deuxième moyen de chauffage) présentent avantageusement une longueur d'onde qui pénètre dans la pâte alimentaire.

## Revendications

1. Dispositif de décongélation, réchauffage et/ou cuisson d'un produit alimentaire, notamment d'une pâte alimentaire surgelée, ce dispositif (1) comprenant
- une platine (3),
- un couvercle (2), définissant avec la platine un espace de cuisson (31) du produit alimentaire,
- un support (6) de réception du produit alimentaire, disposé sur la platine,
- des premiers moyens de chauffage (5) du support, de type électrique, prévus au-dessous ou à l'intérieur dudit support,
- des seconds moyens de chauffage (50, 60 ; 70, 80), prévus au-dessus du support, de type à émission infrarouge,
l'espace de cuisson (31) étant ouvert latéralement sur au moins une partie substantielle du périmètre du dispositif et les seconds moyens de chauffage comprenant un organe central de chauffage (50 ; 70), propre à chauffer une partie centrale du produit alimentaire, ainsi qu'un organe périphérique de chauffage (60 ; 80), propre à chauffer une partie périphérique du produit alimentaire, **caractérisé en ce que** ledit organe central de chauffage (50 ; 70) est distinct de l'organe périphérique de chauffage (60 ; 80).

2. Dispositif selon la revendication 1, **caractérisé en ce que** les parois en regard de la platine et du couvercle définissent une ouverture (8a - 8d) de l'espace de cuisson, qui s'étend sur au moins une partie substantielle du périmètre du dispositif.

3. Dispositif selon la revendication 2, **caractérisé en ce que** l'ouverture de l'espace de cuisson s'étend sur au moins 50% du périmètre du dispositif, plus particulièrement sur au moins 70% du périmètre du dispositif, encore plus particulièrement sur au moins 80% du périmètre du dispositif.

4. Dispositif selon l'une quelconque des revendications précédentes, **caractérisé en ce que** l'espace de cuisson possède une hauteur comprise entre 50 et 100 millimètres, de préférence entre 60 et 80 millimètres, encore de préférence entre 65 et 75 millimètres.

5. Dispositif selon l'une quelconque des revendications précédentes, **caractérisé en ce que** le dispositif est polygonal, notamment rectangulaire, en vue de dessus et l'ouverture du volume de cuisson s'étend sur l'intégralité d'au moins la moitié des côtés du polygone, en particulier sur l'intégralité d'au moins deux côtés du rectangle.

6. Dispositif selon l'une quelconque des revendications précédentes, **caractérisé en ce que** le rapport (R61/R51) entre la dimension radiale (R61) de l'organe périphérique de chauffage (60 ; 80) et la dimension radiale (R51) de l'organe central de chauffage (50 ; 70) est compris entre 2 et 3, notamment voisin de 2.5.

7. Dispositif selon l'une quelconque des revendications précédentes, **caractérisé en ce que** chaque organe de chauffage, respectivement central et périphérique, comprend un unique élément de chauffage (50, 60), chaque élément de chauffage étant relié à des moyens de commande respectifs, indépendants les uns des autres.

8. Dispositif selon l'une quelconque des revendications 1 à 6, **caractérisé en ce que** chaque organe de chauffage, respectivement central et périphérique, comprend un premier (71, 81) et un deuxième (72, 82) éléments de chauffage s'étendant au voisinage l'un de l'autre, les deux éléments de chauffage étant propres à émettre à des première et deuxième gammes de longueurs d'onde différentes.

9. Dispositif selon la revendication 8, **caractérisé en ce que** la première gamme de longueurs d'onde est comprise entre 1.05 et 1.45 micromètres, alors que la seconde gamme de longueurs d'onde est comprise entre 1.6 et 2.1 micromètres.

10. Dispositif selon l'une quelconque des revendications 8 ou 9, **caractérisé en ce que** chaque premier élément de chauffage est relié à des premiers moyens de commande et chaque second élément de chauffage est relié à des seconds moyens de commande, les premiers et les seconds moyens de commande étant indépendants.

11. Dispositif selon l'une quelconque des revendications 7 à 10, **caractérisé en ce que** chaque élément de chauffage comprend un tronçon actif (51, 61) en forme de portion de cercle, ainsi qu'au moins un tronçon rectiligne (52, 62) de raccordement à une alimentation.

12. Dispositif selon l'une quelconque des revendications précédentes, **caractérisé en ce que** l'organe périphérique de chauffage est entouré par une jupe (7) destinée à renvoyer le rayonnement sur le produit alimentaire.

13. Procédé de décongélation, réchauffage et/ou cuisson d'un produit alimentaire, notamment d'une pâte alimentaire surgelée, dans un dispositif (1) conforme à l'une quelconque des revendications précédentes, dans lequel :
a) on chauffe ledit support (6) au moyen desdits premiers moyens de chauffage jusqu'à atteindre une température de consigne et on maintient ladite température de consigne ;
b) on approvisionne un produit alimentaire sur ledit support (6) dans l'espace de chauffage (31) ;
c) on active les seconds moyens de chauffage ;
d) on décongèle, on réchauffe et/ou on cuit le produit alimentaire approvisionné dans l'espace de chauffage pendant une période de temps inférieure à 3 minutes, de préférence inférieure à 2 minutes, plus préférentiellement inférieure à 1,5 minutes ;
e) on sort du dispositif le produit alimentaire décongelé, réchauffé et/ou cuit.

14. Procédé selon la revendication 13, dans un dispositif (1) conforme à l'une quelconque des revendications 8 à 12, **caractérisé en ce que**, dans une première phase de l'étape (c), on active uniquement le premier élément de chauffage central (71) et le premier élément de chauffage périphérique (81), émettant tous deux dans la première gamme de longueur d'ondes puis, dans une deuxième phase de l'étape (c), on active uniquement le deuxième élément de chauffage central (72) et le deuxième élément de chauffage périphérique (72), émettant tous deux dans la deuxième gamme de longueur d'ondes.

## Patentansprüche

1. Vorrichtung zum Auftauen, Erhitzen und/oder Garen eines Lebensmittelprodukts, insbesondere eines tiefgekühlten Lebensmittelteigs, wobei diese Vorrichtung (1) umfasst
- eine Platte (3),
- einen Deckel (2), der mit der Platte einen Raum zum Garen (31) des Lebensmittelprodukts definiert,
- einen Träger (6) zum Aufnehmen des Lebensmittelprodukts, der auf der Platte angeordnet ist,
- erste Heizmittel (5) des Trägers vom elektrischen Typ, die unter dem oder im Inneren des Trägers vorgesehen sind,
- zweite Heizmittel (50, 60; 70, 80) vom Typ mit Infrarot-Emission, die über dem Träger vorgesehen sind, wobei der Garraum (31) seitlich über mindestens einen wesentlichen Teil des Umfangs der Vorrichtung offen ist und die zweiten Heizmittel ein zentrales Heizorgan (50; 70), das dazu geeignet ist, einen zentralen Teil des Lebensmittelprodukts zu erhitzen, sowie ein peripheres Heizorgan (60; 80) umfassen, das dazu geeignet ist, einen peripheren Teil des Lebensmittelprodukts zu erhitzen, **dadurch gekennzeichnet, dass** das zentrale Heizorgan (50; 70) vom peripheren Heizorgan (60; 80) getrennt ist.

2. Vorrichtung nach Anspruch 1, **dadurch gekennzeichnet, dass** die gegenüberliegenden Wände der Platte und des Deckels eine Öffnung (8a - 8d) des Garraums definieren, die sich über mindestens einen wesentlichen Teil des Umfangs der Vorrichtung erstreckt.

3. Vorrichtung nach Anspruch 2, **dadurch gekennzeichnet, dass** sich die Öffnung des Garraums über mindestens 50 % des Umfangs der Vorrichtung, spezieller über mindestens 70 % des Umfangs der Vorrichtung, noch spezieller über mindestens 80 % des Umfangs der Vorrichtung erstreckt.

4. Vorrichtung nach einem der vorstehenden Ansprüche, **dadurch gekennzeichnet, dass** der Garraum eine Höhe im Bereich zwischen 50 und 100 Millimeter, bevorzugt zwischen 60 und 80 Millimeter, noch stärker bevorzugt zwischen 65 und 75 Millimeter besitzt.

5. Vorrichtung nach einem der vorstehenden Ansprüche, **dadurch gekennzeichnet, dass** die Vorrichtung in der Draufsicht vieleckig, insbesondere rechteckig ist, und sich die Öffnung des Garvolumens über die Gesamtheit von mindestens der Hälfte der Seiten des Vielecks, besonders über die Gesamtheit von mindestens zwei Seiten des Rechtecks erstreckt.

6. Vorrichtung nach einem der vorstehenden Ansprüche, **dadurch gekennzeichnet, dass** das Verhältnis (R61/R51) zwischen der radialen Abmessung (R61) des peripheren Heizorgans (60; 80) und der radialen Abmessung (R51) des zentralen Heizorgans (50; 70) im Bereich zwischen 2 und 3, insbesondere nahe 2,5 liegt.

7. Vorrichtung nach einem der vorstehenden Ansprüche, **dadurch gekennzeichnet, dass** jedes Heizorgan, zentral beziehungsweise peripher, ein einziges Heizelement (50, 60) umfasst, wobei jedes Heizelement mit jeweiligen Steuermitteln verbunden ist, die voneinander unabhängig sind.

8. Vorrichtung nach einem der Ansprüche 1 bis 6, **dadurch gekennzeichnet, dass** jedes Heizorgan, zentral beziehungsweise peripher, ein erstes (71, 81) und ein zweites (72, 82) Heizelement umfasst, die sich in Nähe zueinander erstrecken, wobei die zwei Heizelemente dazu geeignet sind, in unterschiedlichen ersten und zweiten Wellenlängenbereichen zu emittieren.

9. Vorrichtung nach Anspruch 8, **dadurch gekennzeichnet, dass** der erste Wellenlängenbereich im Bereich zwischen 1,05 und 1,45 Mikrometer liegt, wohingegen der zweite Wellenlängenbereich im Bereich zwischen 1,6 und 2,1 Mikrometer liegt.

10. Vorrichtung nach einem der Ansprüche 8 oder 9, **dadurch gekennzeichnet, dass** jedes erste Heizelement mit ersten Steuermitteln verbunden ist, und jedes zweite Heizelement mit zweiten Steuermitteln verbunden ist, wobei die ersten und die zweiten Steuermittel unabhängig sind.

11. Vorrichtung nach einem der Ansprüche 7 bis 10, **dadurch gekennzeichnet, dass** jedes Heizelement ein aktives Teilstück (51, 61) in Form eines Kreisabschnitts, sowie mindestens ein gerades Teilstück (52, 62) zum Anschließen an eine Stromversorgung umfasst.

12. Vorrichtung nach einem der vorstehenden Ansprüche, **dadurch gekennzeichnet, dass** das periphere Heizorgan von einer Schürze (7) umgeben ist, die dazu bestimmt ist, die Strahlung auf das Lebensmittelprodukt zurückzulenken.

13. Verfahren zum Auftauen, Erhitzen und/oder Garen eines Lebensmittelprodukts, insbesondere eines tiefgekühlten Lebensmittelteigs, in einer Vorrichtung (1) nach einem der vorstehenden Ansprüche, wobei:
a) der Träger (6) mittels der ersten Heizmittel erhitzt wird, bis eine Solltemperatur erreicht wird, und die Solltemperatur gehalten wird;
b) ein Lebensmittelprodukt auf den Träger (6) im Heizraum (31) gegeben wird;
c) die zweiten Heizmittel aktiviert werden;
d) das in den Heizraum gegebene Lebensmittelprodukt während eines Zeitraums von weniger als 3 Minuten, bevorzugt weniger als 2 Minuten, stärker bevorzugt weniger als 1,5 Minuten aufgetaut, erhitzt und/oder gegart wird;
e) das aufgetaute, erhitzt und/oder gegarte Lebensmittelprodukt aus der Vorrichtung herausgenommen wird.

14. Verfahren nach Anspruch 13 in einer Vorrichtung (1) nach einem der Ansprüche 8 bis 12, **dadurch gekennzeichnet, dass** in einer ersten Phase des Schritts (c) nur das erste zentrale Heizelement (71) und das erste periphere Heizelement (81) aktiviert werden, die alle beide im ersten Wellenlängenbereich emittieren, und anschließend in einer zweiten Phase des Schritts (c) nur das zweite zentrale Heizelement (72) und das zweite periphere Heizelement (72) aktiviert werden, die alle beide im zweiten Wellenlängenbereich emittieren.

## Claims

1. Device for defrosting, heating and/or cooking a food product, in particular a frozen dough, this device (1) comprising
- a plate (3),
- a cover (2), defining with the plate a space for cooking (31) the food product,
- a support (6) for receiving the food product, arranged on the plate,
- first means for heating (5) the support, of electrical type, provided below or inside said support,
- second heating means (50, 60; 70, 80), provided above the support, of the infrared emission type,
the cooking space (31) being open laterally over at least one substantial portion of the perimeter of the device and the second heating means comprising a central heating member (50; 70), specific to heating a central portion of the food product, as well as a peripheral heating member (60; 80), specific to heating a peripheral portion of the food product, **characterised in that** said central heating member (50; 70) is separate from the peripheral heating member (60; 80).

2. Device according to claim 1, **characterised in that** the walls facing the plate and the cover define an opening (8a - 8d) of the cooking space, which extends over at least one substantial portion of the perimeter of the device.

3. Device according to claim 2, **characterised in that** the opening of the cooking space extends over at least 50% of the perimeter of the device, more specifically over at least 70% of the perimeter of the device, even more specifically over at least 80% of the perimeter of the device.

4. Device according to any one of the preceding claims, **characterised in that** the cooking space has a height of between 50 and 100 millimetres, preferably between 60 and 80 millimetres, more preferably between 65 and 75 millimetres.

5. Device according to any one of the preceding claims, **characterised in that** the device is polygonal, in particular rectangular, as a top view and the opening of the cooking volume extends over all of at least half of the sides of the polygon, in particular over all of at least two sides of the rectangle.

6. Device according to any one of the preceding claims, **characterised in that** the ratio (R61/R51) between the radial dimension (R61) of the peripheral heating member (60; 80) and the radial dimension (R51) of the central heating member (50; 70) is of between 2 and 3, in particular near 2.5.

7. Device according to any one of the preceding claims, **characterised in that** each heating member, respectively central and peripheral, comprises one single heating element (50, 60), each heating element being connected to respective control means, independent from one another.

8. Device according to any one of claims 1 to 6, **characterised in that** each heating member, respectively central and peripheral, comprises a first (71, 81) and a second (72, 82) heating element extending into the vicinity of one another, the two heating elements being specific to emitting first and second different wavelength ranges.

9. Device according to claim 8, **characterised in that** the first wavelength range is of between 1.05 and 1.45 micrometres, while the second wavelength range is of between 1.6 and 2.1 micrometres.

10. Device according to any one of claims 8 or 9, **characterised in that** each first heating element is connected to first control means and each second heating element is connected to second control means, the first and the second control means being independent.

11. Device according to any one of claims 7 to 10, **characterised in that** each heating element comprises an active section (51, 61) in the shape of a circular portion, as well as at least one rectilinear section (52, 62) for connecting to a supply.

12. Device according to any one of the preceding claims, **characterised in that** the peripheral heating member is surrounded by a skirt (7) intended to send back the radiation onto the food product.

13. Method for defrosting, heating and/or cooking a food product, in particular a frozen dough, in a device (1) according to any one of the preceding claims, wherein:
a) said support (6) is heated by means of said first heating means, until it reaches a setpoint temperature and said setpoint temperature is maintained;
b) a food product is provided on said support (6) in the heating space (31);
c) the second heating means are activated;
d) the food product provided in the heating space is defrosted, heated and/or cooked for a period of time of less than 3 minutes, preferably less than 2 minutes, more preferably, less than 1.5 minutes;
e) the defrosted, heated and/or cooked food product is removed from the device.

14. Method according to claim 13, in a device (1) according to any one of claims 8 to 12, **characterised in that**, in a first phase of step (c), only the first central heating element (71) and the first peripheral heating element (81) are activated, both emitting in the first wavelength range, then, in a second phase of step (c), only the second central heating element (72) and the second peripheral heating element (72) are activated, both emitting in the second wavelength range.
